# EUROPEAN PATENT APPLICATION

(11) **EP 2 725 056 A1**
(43) Date of publication of application: **30.04.2014**
(21) Application number: 12190161.5
(22) Date of filing: 26.10.2012
(51) Int. Cl.: C08J 9/00, C08J 9/26, C08J 9/35

(54) **Method for making composite PMC polymeric materials based on TFE polymers and copolymers having a controlled porosity and adjustable properties**

(71) Applicant: F.M.I. S.P.A., 25036 Brescia (IT)
(72) Inventor: Rossi, Franco, I-25036 Bescia (IT)
(74) Representative: Cicogna, Franco

(57) **Abstract**

A method for making composite PMC polymeric materials, based on TFE polymers and/or copolymers, having a controlled porosity and modularly adjustable properties, said method comprising the steps of: a) mixing a TFE polymer or copolymer with one or more organic, inorganic substances in a solid or liquid form, to adjust the chemical, physical and mechanical properties of the composite material; b) adding to the mixture chemical organic and inorganic composites and complex mixtures thereof, said substances being adapted to sublimate or quickly evaporate or transform into a gas by a thermal processing in a temperature range from 30° to 380°C, B Composites, said "B Composites" being absent in the end product after sintering; c) processing said mixture to form articles; d) thermally processing, under vacuum, said articles to form a controlled porosity; and e) thermally sintering said controlled porosity articles of said step d).

## Description

### BACKGROUND OF THE INVENTION

The present invention relates to a method for making composite PMC polymeric materials based on TFE polymers and copolymers having a controlled porosity and adjustable properties.

As is known, TFE polymers and copolymers have interesting basic technologic properties, such as a chemical resistance, the capability of being used at high temperatures, a low friction coefficient and electric and thermal conductivity.

Some disadvantages of such a material are their high creeping, wear and weight of finished products. and, depending on application, a low electric and thermal conductivity and a poor dimensional stability.

In order to overcome some of the TFE polymer and/or copolymer material performance inefficiencies, composite TFE polymers have been designed, in which to a continuous polymeric matrix a dispersed phase is associated consisting of different filling materials such as ceramics, bronze and silica materials, thereby forming the so-called "A composite materials".

All the above composite materials have been designed to improve, for example, their wear resistance, electric and thermal conductivity, while increasing the dimensional or size stability and other technologically interesting properties.

In the TFE polymer and/or copolymer porous composite material field, semifinished products in the form of plates, sheets and films are moreover known.

The porosity of the above materials is achieved by different porosity controlling methods:
(a) a weaving of unknotted threads or a needle processing thereof and a transforming into sheets;
(b) a dissolving of dissolvable filling materials by suitable solvents; and
(c) a provision of a desired porosity by a monoaxially and multi-axially stretching material.

The above prior methods are very complex and expensive, with a high solvent material consume and operating times and a use of dedicated apparatus.

Moreover, said methods may be only applied to small thickness semi-finished materials, but not to tubes, rods, bars, plates of a comparatively high thickness, typically larger than 60 mm, thereby narrowing the application and processing field of porous PMC materials based on TFE polymers and/or copolymers.

### SUMMARY OF THE INVENTION

Accordingly, the aim of the present invention is to provide a method for making composite PMC polymeric materials, based on TFE polymers and/or copolymers, having a controlled porosity and modularly adjustable properties, adapted to overcome the above mentioned prior art drawbacks.

According to one aspect of the present invention, the above aim, as well as yet other objects, which will become more apparent hereinafter, are achieved with a method for making composite PMC polymeric materials, based on TFE polymers and/or copolymers, having a controlled porosity and modularly adjustable properties, **characterized in that** said method comprises the steps of:
a) mixing a TFE polymer with one or more organic, inorganic substances, in a solid or liquid form, for modulating the chemical, physical and mechanical properties of the composite material (A type composite materials);
b) adding to the above mixture organic or inorganic chemical compounds and complex compounds thereof, said compounds being adapted to sublimate or quickly evaporate or to be converted to a gas by a thermal processing in a temperature range from 30° to 380°C (hereinbelow referred to as B Composite materials). Said "B composite materials" being absent in an end product after sintering;
c) processing the mixture to form articles;
d) further thermally processing, under a controlled pressure, to achieve a desired porosity; and
e) performing a sintering thermal treatment or processing operation.

### BRIEF DESCRIPTION OF THE DRAWING

Further characteristics and advantages of the present invention will become more apparent hereinafter from the following disclosure of a preferred, though not exclusive, embodiment of the invention which is illustrated, by way of an indicative, but not limitative, example in the accompanying drawing, where:

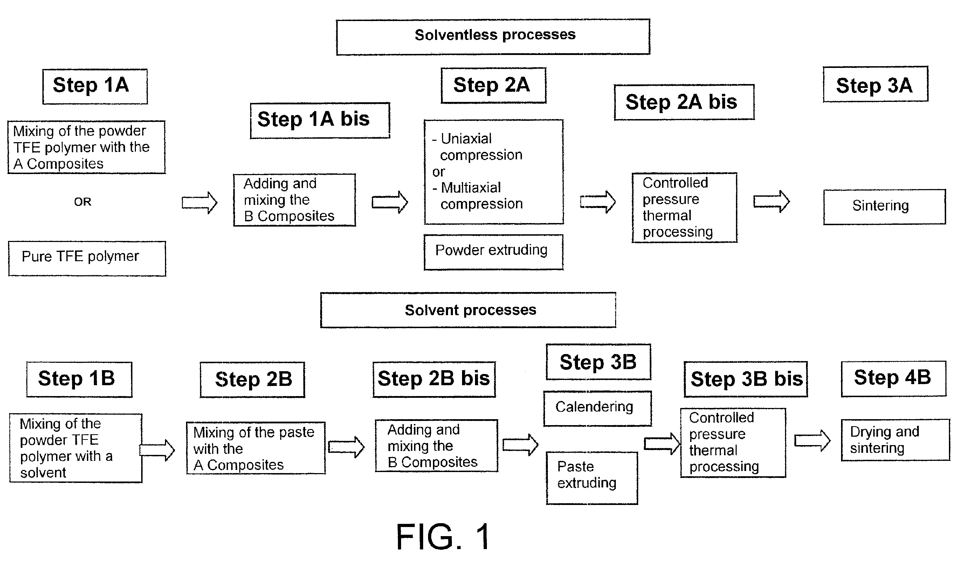

Figure 1 is a schematic diagram showing the main operating steps of the method according to the present invention.

### DESCRIPTION OF THE PREFERRED EMBODIMENTS

In Figure 1, the novel operating steps of the inventive method, which have been respectively indicated by the steps 1A bis, 2A bis, 2B bis and 3 bis are schematically shown.

More specifically, the invention relates to a method or process for making composite porous polymeric materials (PMC) including, as a continuous phase or matrix thereof, the TFE polymers and/or copolymers and porous TFE polymers and/or copolymers.

In the present disclosure, the generic phrase "a composite porous polymeric material", or "porous PMC's" should be interpreted as extended to macrocomposite, microcomposite and nanocomposite porous materials including as a material matrix or continuous phase, the subject TFE polymers and/or copolymers.

The inventive method provides porous PMC's or porous TFE polymers and copolymers having a closed cell, an open cell or a hybrid structure with a pore size larger than 1 micron.

Said porosity is achieved as follows:
A) In the polymer and/or copolymer mixing step, the TFE polymer continuous phase is added with organic or inorganic solid chemical substances, in the form of fibers, flakes or balls, in a pre-preparing operation of the composite material mixture.

The above substances constitute the TFE polymer based porous PMC's dispersed phase, and will be hereinbelow referred to as "A Composites".

The above operation is carried out for the composite materials only but not for the TFE polymers and copolymers.
B) An addition to the above mixture of organic or inorganic chemical compounds and complex mixtures thereof; said substances being adapted to be sublimated or quickly evaporated or converted into a gas by a thermal processing in a temperature range from 30° to 380°C, and being hereinbelow referred to as "B Composites".

Said B Composites are not present in the end product after sintering.
C) A machining or treatment of the A) phase mixture, only for PMC's and the B) phase, to provide a semifinished product in the form of plates or films or mono or bidirectional sheets, tubes, rods or bars by conventional methods such as calendering, pressure molding, isostatic molding, paste extruding, dispersion depositing, suspension coagulating methods.
D) A thermal processing or treatment of the half-finished product to sublimate and/or quickly evaporate and/or for achieving a quick conversion to a gas of the B Composites.
E) A sintering thermal treatment for consolidating the half-finished product.

The dimension or size of the pores obtained by the above method is controlled by the B) substance particle size.

The technical articles made by the subject making process, and consisting of TFE polymer and copolymer porous PMC's, and pure TFE polymers and copolymers are: tubes, round rods, bars, plates, and mono and bidirectional sheet elements.

The above technical articles may be used for making sealing systems both of a static and a dynamic type, diaphragms, thermally and electrically insulating systems and technical articles in general.

More specifically, the present invention is related to TFE polymer or copolymer porous PMC materials and pure TFE polymers and copolymers, and to a novel method or process for making them.

The subject method or process exploits a sublimation and/or evaporation and/or gas conversion atmospheric pressure and/or vacuum status changing reactions of organic, inorganic chemical compounds and complex mixtures thereof (B Composites).

The above composite materials, either individually or in any desired mixture thereof, are added to the TFE polymer and/or copolymer based mixture.

Said mixture is processed as to provide a half-finished product by conventional processing methods for processing TFE polymers and/or copolymers; said mixture processing method being carried out under temperature and pressure conditions at which the B Composites are stable.

The thus made half-finished product or article is subjected to a pore forming process, in which the temperature and pressure conditions, or both said conditions, are modified.

Under the above conditions, the B Composites are not stable and are subjected to a sublimation and/or degradation and/or a transformation into volatile substances.

The pore formation is achieved under controlled temperature and pressure conditions, at which, at the original place occupied by the solid status Composites B pores are generated and which size is proportional to the solid particle size, as originally present before the transformation to a volatile substance.

The TFE polymer and/or copolymer based porous PMC half-finished products, made with the subject method, may be easily used to obtain technical articles for different applications.

For example, in a thermal insulation application field, at high temperature conditions of typically about 280°C, it would be advantageous to use TFE polymer and/or copolymer based porous materials owing to their high heat resistance.

Moreover, if the component achieved by the porous materials has a structural function, then it would be useful to use TFE polymer and/or copolymer based PMC materials owing to their mechanical performance much improved than porous TFE polymers and/or copolymers.

In the field of mechanical movable components performing sliding and rolling movements, the TFE polymer and/or copolymer based porous PMC's may be used for releasing lubricating agents, thereby providing improved performances for a long time period.

In the static gasket sealing field, it is possible to provide finished products having improved mechanical properties, allowing to achieve an enhanced sealing performance with respect to the gasket duration and time efficiency.

The method according to the present invention allows provides TFE polymer and copolymer based porous PMC materials with different geometrical configurations such as tubes, round rods, bars, plates, sheet and film elements, differently from conventional methods providing geometrical configurations in the form of sheet and film elements only.

The inventive method may also be used for making technical articles such as films, plates, tubes, round rods made of TFE (tetrafluoroethylene) polymer and/or copolymer porous composite materials.

The organic and inorganic chemical substances and complex mixtures thereof, herein called A Composites comprise: silica, silicates, coal, graphite, metal filling materials in general (such as bronze, steel, nickel and so on), mineral filling materials such as barite, calcium carbonate, flakes, fibers, hollow or solid ball glass, ceramics, alumina, mica, clays, foamed mica, foamed graphite, carbon nanotubes, clay nanotubes, laponite, talc, zeolites, titanates, silicon carbide, silicone and titanium based binding or coupling agents.

The present invention is based on a use of chemical compounds or compositions, thereinabove called B Composites, of either organic and/or inorganic nature, and complex mixtures thereof.

The mentioned B Composites have at least the two following main features:

A first of said main features of said B Composites is that they are subjected to aggregation status changes, from a solid to a gaseous (sublimation) status as the environment temperature and/or pressure in which they are present changes.

The second main feature is that they are subjected to their solid status temperature for forming gaseous substances.

In such a case, the temperature and/or pressure facilitate a gaseous phase substance formation.

The B Composites may comprise: urea, azodicarbonamide (dicarboxylic acid diamide), ammonium acetate, ammonium nitrate, ammonium carbonate, ammonium bicarbonate, ammonium citrate, ammonium succinate, ammonium fumarate, ammonium glycolate, p-toluen-sulfohydrazide, 4,4'-oxybis(benzolsulfohydrazide), 2,4,6-tri-hydrazine-1,3,5-triazine, p-toluol-sulfonylsemicarbazide, 5-phenyl-tetrazole, ammonium lactate, ammonium ethylendiaminotetracetate, naphthalene and others.

The B Composites may be added at a rate from 5% to 80% by weight of the end mixture.

The B Composite amount variation allows to adjustably modulate the physical and mechanical properties of the end product.

The B Composites may be used either individually or in any desired mixtures thereof.

The method according to the present invention exploits the main features of the B Composites stated at items 1 and 2 to achieve a desired porosity of the TFE polymer and/or copolymer based composite materials and TFE pure polymers and/or copolymers.

In a case of TFE polymer and/or copolymer based porous PMC materials, the inventive method allows to introduce into a conventional process either with or without a use of solvents, B Composites in either one or the other of the two phases: or joints with the A Composite mixing or after said mixing.

In the TFE pure polymer case, the B Composites are added to and mixed with the TFE polymer and/or copolymer before forming the article of manufacture both by a solvent process and a solventless process.

A main aspect of the present invention is the thermal processing of the achieved article of manufacture under a controlled pressure before the thermal sintering treatment.

Depending on the used B Composite, the thermal processing operation may be carried out at temperatures from 30° to 327°C under a controlled pressure regimen; under these conditions, sublimating and/or B Composite gas transformation reactions, as indicated at items 1) and 2), occur.

The above reactions will provide a microporosity with an average pore size larger than 1 µm.

The pore size may be modulated by properly choosing the B Composite particle size.

The main operating steps of the method according to the present invention are schematically shown in the figure 1 diagram or flowchart.

In the solventless process, the novel operating steps comprise the 1A bis operating step related to the B Composite adding, and the 2A bis operating step related to the product thermal processing under a controlled pressure.

In the solvent process, the novel operating steps comprise the 2B bis step related to the B Composite adding and the 3B bis step related to the product thermal processing under a controlled pressure.

In the operating step 1A of the solventless process, the pure polymer and/or copolymer without using the A type Composites to achieve the target porosity in the TFE based polymer and/or copolymer is used.

In the solvent process, the operating step 2B for achieving the desired TFE polymer porosity is eliminated.

### EXAMPLES:

### Example 1

a) Mixing of 2000 gr of a Du Pont 62N type modified PTFE with 500 gr of solvent (kerosene) by a drum mixer;
b) adding of 730 gr muscovite and 360 gr SIBELITE type porous silica;
c) high speed mixing for forming fibrils;
d) adding of 1000 gr of ammonium acetate;
e) low speed mixing;
f) forming of a preform by processing the paste through calandering to achieve sheet elements having a thickness of 2 mm;
g) thermally processing at 180°C for 6 hours at a pressure of 1 atm with a gas recovering and environment temperature cooling; and
h) thermally sintering at 360°C for 3 hours.

### Example 2

a) Mixing of 2000 gr Dyneon 2025Z type modified PTFE with 1350 gr ethanol;
b) adding of 30 gr Peralit 13 perlite type foamed silica;
c) adding of 650 gr Diamelia type barium sulphate;
d) high speed mixing to provide PTFE fibrils;
e) adding of 2100 gr ammonium bicarbonate and a low speed mixing;
f) forming a semifinished product by calendering to a 3 mm thickness;
g) thermally processing at 60°C for 7 hours at a pressure of 0.5 atm with a gas recovering and environment temperature cooling; and
h) thermally sintering at 360°C for 3 hours.

### Example 3

a) Mixing of 2000 gr Dyneon 2001Z modified PTFE with 600 gr Isopar SPH type solvent;
b) high speed mixing to provide PTFE fibrils;
c) adding 2600 gr ammonium bicarbonate;
d) low speed mixing;
e) a further processing by calendering the achieved paste;
f) thermally processing at 120°C for 7 hours and at 1 atm with a gas recovering and environment temperature cooling; and
g) thermally sintering.

It has been found that the invention fully achieves the intended aim and objects.

In fact, the invention has provided a method allowing to make bidirectional plates, finished products and technical half-finished articles, of TFE polymers and porous composite materials including a TFE polymer and/or copolymer matrix, having modularly adjustable chemical, physical and mechanical properties.

## Claims

1. A method for making composite PMC polymeric materials, based on TFE polymers and/or copolymers, having a controlled porosity and modularly adjustable properties, said method being **characterized in that** it comprises the steps of:
a) mixing a TFE polymer or copolymer with one or more organic, inorganic substances in a solid or liquid form, to adjust the chemical, physical and mechanical properties of the composite material;
b) adding to the mixture chemical organic and inorganic composites and complex mixtures thereof, said substances being adapted to sublimate or quickly evaporate or transform into a gas by a thermal processing in a temperature range from 30° to 380°C, B Composites, said "B Composites" being absent in the end product after sintering;
c) processing said mixture to form articles;
d) thermally processing, under vacuum, said articles to form a controlled porosity; and
e) thermally sintering said controlled porosity articles of said step d).

2. A method, according to claim 1, **characterized in that** said step (C) comprises to process the mixture to provide technical articles in the form of plates, sheets, mono and bidirectional films, tubes, round rods and bar elements.

3. A method, according to claim 1, **characterized in that** said step (d) comprises a vacuum thermal processing, carried out at an atmospheric pressure and/or at a pressure larger than said atmospheric pressure, to provide a controlled porosity at a temperature from 25°C to 327°C.

4. A method, according to claim 1, **characterized in that** said step (e) comprises a thermal sintering carried out at a temperature larger than 327°C.

5. A method, according to claim 1, **characterized in that** said method provides technical articles made of pure TFE controlled porosity polymers and/or copolymers.

6. A method, according to claim 1, **characterized in that** said method provides plates, mono and multidirectional sheets and films, round tubes and rod elements based on TFE polymer and/or copolymer porous PMC materials and pure porous TFE polymers and/or copolymers.

7. A method, according to claim 1, **characterized in that** said method comprises thermally processing one or more of the following compounds: urea, azodicarbonamide (dicarboxylic acid diamide), ammonium acetate, ammonium nitrate, ammonium carbonate, ammonium bicarbonate, ammonium citrate, ammonium succinate, ammonium fumarate, ammonium glycolate, p-toluen-sulfo-hydrazide, 4,4'-oxybis(benzolsulfohydrazide), 2,4,6-tri-hydrazine-1,3,5-triazine, p-toluol-sulfonylsemicarbazide, 5-phenyl-tetrazole, ammonium lactate, ammonium ethylendiaminotetracetate, naphthalene and others, referred to as B Composite in the accompanying description.
